# EUROPEAN PATENT APPLICATION

(11) **EP 4 779 728 A1**
(43) Date of publication of application: **22.07.2026**
(21) Application number: 24880139.1
(22) Date of filing: 17.10.2024
(51) Int. Cl.: H01M 8/04119, B01D 63/02, C08K 5/134, H01M 8/10

(54) **HOLLOW FIBER MEMBRANE FOR FUEL CELL MEMBRANE HUMIDIFIER, FUEL CELL MEMBRANE HUMIDIFIER COMPRISING SAME, AND METHOD FOR MANUFACTURING HOLLOW FIBER MEMBRANE**

(30) Priority: 17.10.2023 KR 20230138873; 24.10.2023 KR 20230143173
(71) Applicant: Kolon Industries, Inc., Seoul 07793 (KR)
(72) Inventor: LEE, Seung Hwan, Seoul 07793 (KR); OH, Young Seok, Seoul 07793 (KR); LEE, Ji Yoon, Seoul 07793 (KR)
(74) Representative: Vossius & Partner Patentanwälte Rechtsanwälte mbB
(86) International application number: PCT/KR2024/015749
(87) International publication number: WO 2025/084802

(57) **Abstract**

The present disclosure relates to a hollow fiber membrane for a fuel cell membrane humidifier, including a porous polymer and a phenol-based antioxidant dispersed within the porous polymer, a method of preparing the same, and a fuel cell membrane humidifier including the hollow fiber membrane, and thus there is an effect of preventing deterioration and decomposition of the hollow fiber membrane.

## Description

### Technical Field

The present disclosure relates to a hollow fiber membrane for a fuel cell membrane humidifier, a method of preparing the same, and a fuel cell membrane humidifier including the hollow fiber membrane, and more particularly, to a hollow fiber membrane for a fuel cell membrane humidifier, in which deterioration and decomposition of the hollow fiber membrane are prevented and which prevents deterioration and decomposition of a polymer electrolyte membrane of a fuel cell stack, and a fuel cell membrane humidifier including the same.

### Background Art

Fuel cells are power-generating cells that convert the chemical energy of hydrogen and oxygen into electrical energy through an electrochemical reaction. Unlike general chemical cells such as dry cells or storage cells, fuel cells have advantages in that the fuel cells may continuously generate electricity as long as hydrogen and oxygen are supplied, and have no heat loss and thus have about twice the efficiency of internal combustion engines.

In addition, since hydrogen and oxygen are used as raw materials to generate water as a product, fuel cells are environmentally friendly power generation devices that do not generate pollutants. Therefore, fuel cells have advantages of being not only environmentally friendly but also reducing concerns about resource depletion due to an increase in energy consumption.

Fuel cells may be classified into polymer electrolyte membrane fuel cells (PEMFCs), phosphoric acid fuel cells (PAFCs), molten carbonate fuel cells (MCFCs), solid oxide fuel cells (SOFCs), and alkaline fuel cells (AFCs).

Among the fuel cells, the PEMFCs are known to be suitable for use in transportation systems because they can operate at lower temperatures and have greater power density than other fuel cells.

Meanwhile, during driving of PEMFCs, generally, 2 moles of hydrogen react with 1 mole of oxygen in a fuel cell stack to form water. However, when an incomplete reaction occurs, in some cases, byproducts such as peroxides or hydroxyl radicals may be generated.

There is a problem in that when peroxides or hydroxyl radicals generated in this way flow from a fuel cell stack to a membrane humidifier, the peroxides or hydroxyl radicals cause oxidation of an organic hollow fiber membrane in the membrane humidifier, which decomposes and deteriorates the hollow fiber membrane.

Decomposition and deterioration of a hollow fiber membrane impede sufficient delivery of humidified air to a fuel cell stack, thereby reducing the efficiency of the fuel cell stack and all fuel cells.

In order to prevent such deterioration of a hollow fiber membrane included in a membrane humidifier, it is necessary to minimize amounts of oxidative materials delivered from a fuel cell stack to the hollow fiber membrane, by improving the oxidation resistance of the hollow fiber membrane itself or minimizing the generation of oxidation materials from the fuel cell stack.

### Disclosure of Invention

### Technical Problem

As described above, the present disclosure provides a hollow fiber membrane for preventing deterioration and decomposition of a hollow fiber membrane included in a membrane humidifier.

### SOLUTION TO PROBLEM

According to an aspect, provided is a hollow fiber membrane for a fuel cell membrane humidifier, the hollow fiber membrane including a porous polymer and a phenol-based antioxidant dispersed within the porous polymer.

According to another aspect, provided is a method of preparing a hollow fiber membrane for a fuel cell humidifier, the method including preparing a dope solution for forming a hollow fiber membrane including a polymer and a phenol-based antioxidant, discharging the dope solution into a coagulation bath through a tubular spinning device, and coagulating, in the coagulation bath, a spinning solution which has been discharged into the coagulation bath, and then winding and drying a coagulated resultant to obtain the hollow fiber membrane, wherein the hollow fiber membrane includes a porous polymer and the phenol-based antioxidant, and the phenol-based antioxidant is dispersed within the porous polymer.

According to another aspect, provided is a fuel cell membrane humidifier including the hollow fiber membrane for a fuel cell membrane humidifier.

### Advantageous Effects of Invention

Since a hollow fiber membrane for a fuel cell membrane humidifier according to an aspect includes a porous polymer, and a phenol-based antioxidant dispersed within the porous polymer, oxidative materials such as hydroxyl radicals and/or peroxides flowing into a membrane humidifier preferentially react with the phenol-based antioxidant to be converted into a stable molecular form, thereby preventing radical reactions in the hollow fiber membrane. In addition, in a hollow fiber membrane for a fuel cell membrane humidifier, since a phenol-based antioxidant is dispersed and disposed in a porous polymer and is present in a non-crosslinked form, a portion of the phenol-based antioxidant may flow out to humidified air during a humidification process of external air, and since the flowing-out phenol-based antioxidant is supplied into a fuel cell stack together with the humidified air, oxidative materials generated inside the fuel cell stack may be removed by the phenol-based antioxidant inside a stack before flowing into a membrane humidifier. As a result, a concentration of the oxidative materials in high-temperature and high-humidity air entering the fuel cell membrane humidifier may be substantially reduced. As a result, decomposition and deterioration of a hollow fiber membrane for a fuel cell membrane humidifier may be prevented, and the durability of the fuel cell membrane humidifier may be improved.

### BRIEF DESCRIPTION OF DRAWINGS

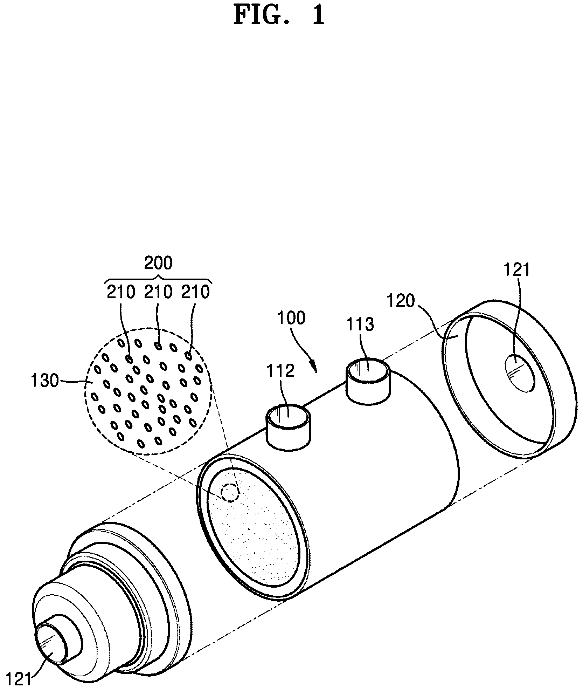

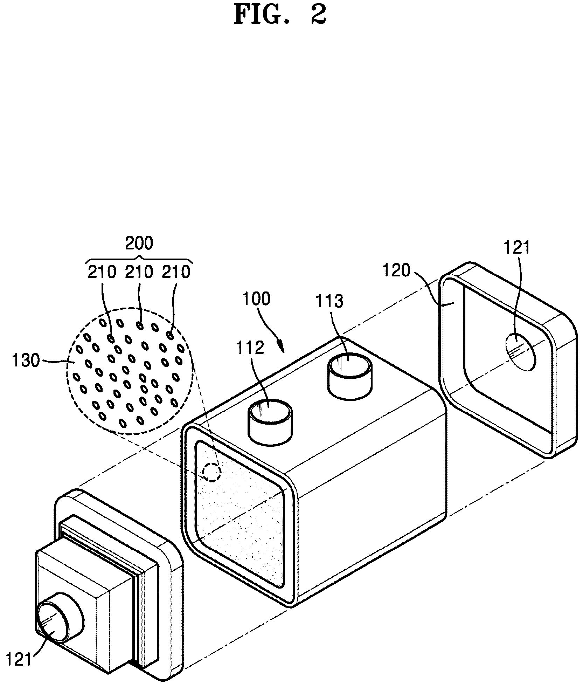

FIGS. 1 and 2 are exploded perspective views of a humidifier for a fuel cell, according to an embodiment.

### Best Mode for Carrying out the Invention

### Mode for the Invention

Hereinafter, as the present inventive concept allows for various changes and numerous embodiments, specific embodiments will be illustrated in the drawings and described in detail in the written description. However, this is not intended to limit the present inventive concept to particular modes of practice, and it is to be appreciated that all changes, equivalents, and substitutes that do not depart from the spirit and technical scope are encompassed in the present inventive concept.

The terms used herein are merely used to describe specific embodiments and are not intended to limit the present inventive concept. An expression used in the singular encompasses the expression of the plural, unless it has a clearly different meaning in the context. As used herein, it is to be understood that the terms such as "including," "having," and "comprising" are intended to indicate the existence of the features, numbers, steps, actions, components, parts, ingredients, materials, or combinations thereof disclosed in the specification and are not intended to preclude the possibility that one or more other features, numbers, steps, actions, components, parts, ingredients, materials, or combinations thereof may exist or may be added.

When it is described that a certain component is "connected" or "coupled" to another component, it should be understood that the certain component may be directly connected or coupled to the other component, or new other components may present between the certain component and the other component. On the other hand, when it is described that a certain component is "directly connected" or "directly coupled" to another component, it should be understood that new other components are not present between the certain component and the other component.

Throughout the specification, it will be understood that when a component, such as a layer, a film, a region, or a plate, is referred to as being "on" another component, the component may be directly on the other component or intervening components may be present thereon. Throughout the specification, while such terms as "first," "second," and the like may be used to describe various components, such components should not be limited to the above terms. The above terms are used only to distinguish one component from another.

The term "polymer" as used herein refers to a polymer formed by polymerization of one or more monomer units and has a meaning encompassing polymer resins and polymer macromolecules.

Embodiments set forth herein are merely examples and various changes may be made therein.

A hollow fiber membrane for a fuel cell membrane humidifier according to an aspect may include a porous polymer, and a phenol-based antioxidant dispersed within the porous polymer.

Here, the porous polymer is a polymer that forms a tubular hollow fiber membrane having a hollow portion at a central portion thereof and has a plurality of pores that allow water molecules to selectively pass therethrough. The hollow fiber membrane has an average pore size of 0.05 nm to 90,000 nm. When a pore size of the hollow fiber membrane is excessively large, durability becomes problematic, and when the pore size is excessively small, moisture exchange is not easy, which makes it difficult to sufficiently humidify external air passing through a humidifier.

The average pore size has been measured using capillary flow porometry (CFP), and the pore size refers to a straight-line distance between the two furthest points along a cross-sectional circumference of a pore.

In addition, the porous polymer forming the hollow fiber membrane may have a porosity of 45 % to 85 %.

A hollow fiber membrane not including the phenol-based antioxidant has an average pore size of 0.1 nm to 100,000 nm and a porosity of 50 % to 90 %, and even when the phenol-based antioxidant is applied to a hollow fiber membrane, differences in the above-described average pore size and porosity are not large. Thus, while the moisture exchange performance of the hollow fiber membrane is maintained without any changes, deterioration of the hollow fiber membrane by hydroxyl radicals and peroxides is effectively prevented, thereby improving durability.

According to an embodiment, the porous polymer may include a sulfone group-containing polymer.

For example, the sulfone group-containing polymer is not particularly limited as long as the sulfone group-containing polymer is a polymer having a main framework and containing a sulfone group in a molecule. The polymer may include a polysulfone-based polymer, a sulfonated polysulfone, a perfluorosulfonic acid (PFSA)-based polymer, a polyphenylsulfone-based polymer, a polyethersulfone (PES)-based polymer, or any combination thereof.

According to an embodiment, the porous polymer may include a PES-based polymer.

According to an embodiment, the porous polymer may include the above-described sulfone-containing polymer as a main polymer and may further include an auxiliary polymer described below in consideration of the desired properties of the hollow fiber membrane.

According to an embodiment, the porous polymer may further include at least one auxiliary polymer selected from the group consisting of a polyvinylidene fluoride (PVDF)-based polymer, cellulose acetate, cellulose triacetate, polymethyl methacrylate, Nafion, a polystyrene (PS)-based polymer, a polytetrafluoroethylene (PTFE)-based polymer, a polyacrylonitrile (PAN)-based polymer, a polyetherimide (PEI)-based polymer, and a polyimide (PI)-based polymer. When such an auxiliary polymer is used together with the sulfone-containing polymer, the auxiliary polymer may be used in an amount of 5 to 20 parts by weight with respect to the main polymer.

According to an embodiment, the porous polymer may be included in an amount of 90 parts by weight or more but less than 100 parts by weight with respect to 100 parts by weight of the hollow fiber membrane.

For example, the porous polymer may be included in an amount of 91 to 99 parts by weight, 92 to 98 parts by weight, 93 to 97 parts by weight, or 94 to 96 parts by weight with respect to 100 parts by weight of the hollow fiber membrane.

When the porous polymer in the hollow fiber membrane satisfies the above range, sufficient durability of the hollow fiber membrane may be achieved, and sufficient moisture exchange performance may be exhibited in a humidifier.

According to an embodiment, the phenol-based antioxidant may be non-crosslinked with the porous polymer. That is, particles of the phenol-based antioxidant are not chemically bonded to the porous polymer.

According to an embodiment, the porous polymer may include a plurality of pores, and at least a portion of the phenol-based antioxidant may be present in the pores.

For example, the phenol-based antioxidant may be physically attached to a surface of the pores of the porous polymer or may be embedded and present in the surface of the pores.

In addition, the phenol-based antioxidant may be embedded in a framework of the porous polymer to form one body with the porous polymer.

For example, a portion of the phenol-based antioxidant may be present on the surface of the pores of the porous polymer, and the remaining portion thereof may be embedded in the framework of the porous polymer to form one body with the porous polymer.

Since the phenol-based antioxidant does not form a chemical bond with the porous polymer, the antioxidant may flow out to be delivered to a fuel cell stack together with humidified air during a process in which external air passes through the hollow portion of the hollow fiber membrane. As a result, an oxidative material generated in a stack during driving of a fuel cell may be removed before being delivered to a humidifier.

According to an embodiment, the antioxidant may be included in the hollow fiber membrane through a preparation process to be described below. For example, the antioxidant may be included in the hollow fiber membrane by being mixed with a dope solution during a membrane forming process, the antioxidant may be included in a core solution and discharged to be included inside the hollow fiber membrane during a phase inversion, or the antioxidant may be included in the hollow fiber membrane by preparing the hollow fiber membrane, and then infiltrating an antioxidant solution into the hollow portion to form an antioxidant coating layer on an inner surface of the hollow fiber membrane.

According to an embodiment, the antioxidant may be in a dispersed form or in a form of a coating layer on at least one surface of an inner surface and an outer surface of a hollow fiber membrane. For example, the antioxidant may have a form in which particles are attached to at least one surface of the inner surface and the outer surface of the hollow fiber membrane, or a plurality of particles form a coating layer.

For example, the particles of the antioxidant may be uniformly distributed on the entire surface not to block pores of the hollow fiber membrane.

According to an embodiment, the antioxidant may form an antioxidant coating layer disposed on at least one surface of the inner surface and the outer surface of the hollow fiber membrane. In this case, when in contact with external air, the antioxidant coating layer may be configured to allow a certain amount of the antioxidant to flow out. In order for a certain amount of the antioxidant to flow out, the antioxidant should not form a chemical bond with the porous polymer, and it is advantageous for the antioxidant to be positioned on an inner surface of a membrane. Therefore, when a humidifying membrane is formed, a crosslinking agent or an additive that may cause crosslinking between the antioxidant and the main polymer should be excluded.

According to an embodiment, the phenol-based antioxidant is a compound including a phenol moiety and has a particle form.

According to an embodiment, the phenol-based antioxidant may include Irganox 1010 (pentaerythritol tetrakis[3-(3,5-di-t-butyl-4-hydroxyphenyl)propionate manufactured by BASF SE), Irganox 1076 (octadecyl-3-(3,5-di-t-butyl-4-hydroxyphenyl)propionate manufactured by BASF SE), Irganox 1330 (3,3',3",5,5',5"-hexa-tert-butyl-α,α',α"-(mesitylene-2,4,6-triyl)tri-p-cresol manufactured by BASF SE), Irganox 3114 (1,3,5-tris(3,5-di-tert-butyl-4-hydroxybenzyl)-1,3,5-triazine-2,4,6(1H,3H,5H)-trione manufactured by BASF SE), Irganox 3790 (1,3,5-tris((4-tert-butyl-3-hydroxy-2,6-xylyl)methyl)-1,3,5-triazine-2,4,6(1H,3H,5H)-trione manufactured by BASF SE), Irganox 1035 (thiodiethylene bis[3-(3,5-di-tert-butyl-4-hydroxyphenyl)propionate] manufactured by BASF SE), Irganox 1135 (benzenepropanoic acid, 3,5-bis(1,1-dimethylethyl)-4-hydroxy-C7-C9 side chain alkyl ester manufactured by BASF SE), Irganox 1520L (4,6-bis(octylthiomethyl)-o-cresol manufactured by BASF SE), Irganox 3125 (manufactured by BASF SE), Irganox 565 (2,4-bis(n-octylthio)-6-(4-hydroxy-3',5'-di-tert-butylanilino)-1,3,5-triazine manufactured by BASF SE), ADEKAstab^{®} AO-80 (3,9-bis[2-(3-(3-tert-butyl-4-hydroxy-5-methylphenyl)propanoyloxy)-1,1-dimethylethyl]-2,4,8,10-tetraoxaspiro[5.5]undecane manufactured by ADEKA Corporation), Smilizer^{®} BHT, GA-80, and GS (all manufactured by Sumitomo Chemical Co., Ltd.), Cyanox^{®} 1790 (manufactured by Cytec Co., Ltd.), and vitamin E (manufactured by Eisai Co., Ltd.), or any combination thereof.

For example, the phenol-based antioxidant may include octadecyl-3-(3,5-di-t-butyl-4-hydroxyphenyl)propionate.

The phenol-based antioxidant may be included in an amount of 0.1 to 5 parts by weight with respect to 100 parts by weight of the porous polymer.

When the antioxidant is included in an amount of less than 0.01 parts by weight, it may be insufficient to prevent deterioration of the hollow fiber membrane caused by peroxides or hydroxyl radicals generated during a fuel cell reaction, and when the antioxidant is included in an amount of more than 5 parts by weight, the pores of the hollow fiber membrane may be blocked to degrade moisture exchange performance, thereby degrading a membrane humidifier function.

When two or more phenol-based antioxidants are used in combination, for example, when a first antioxidant and a second antioxidant are used, the first antioxidant and the second antioxidant may be used in a weight ratio of 1:9 to 9:1.

According to an embodiment, the hollow fiber membrane may have a thickness of 0.5 nm to 1 mm.

According to an embodiment, the hollow fiber membrane may further include an additive such as a surfactant, a hydrophilic organic compound, a hydrophilic polymer, or a crosslinking agent.

For example, the additive may include at least one of polyethylene glycol, glycerin, diethyl glycol, triethylene glycol, ethanol, polyvinylpyrrolidone, water, zinc chloride, and lithium chloride.

The additive may be selected and added in an appropriate amount within a range that does not impair the original physical properties of the hollow fiber membrane. It will be apparent to those of ordinary skill in the art that other known materials may also be used in the preparation of the hollow fiber membrane.

According to an aspect, provided is a method of preparing a hollow fiber membrane for a fuel cell humidifier, the method including preparing a dope solution for forming a hollow fiber membrane including a polymer and a phenol-based antioxidant, discharging the dope solution into a coagulation bath through a tubular spinning device, and coagulating, in the coagulation bath, a spinning solution which has been discharged into the coagulation bath, and then winding and drying a coagulated resultant to obtain the hollow fiber membrane, wherein the hollow fiber membrane includes a porous polymer and the phenol-based antioxidant, and the phenol-based antioxidant is dispersed within the porous polymer.

A humidifier for a fuel cell supplies humidified air to a fuel cell stack. In this case, when impurities are included in the humidified air, the impurities may cause a reduction in lifespan of a fuel cell. Therefore, it is necessary to suppress the elution of impurities caused by the decomposition of a hollow fiber material. Since hollow fibers are inherently formed of organic polymers, when the hollow fibers are exposed to a high-temperature and high-humidity air generated from a stack during driving of a fuel cell, a polymer may be deformed or ruptured, or various impurity ions may be generated due to polymer decomposition. These impurities may be delivered into a stack to cause a degradation in performance of a fuel cell stack.

To solve these problems and increase the durability of a hollow fiber membrane, attempts have been made to add a fluorine-based material as a polymer or provide a durable coating layer on a surface of the hollow fiber membrane. However, the addition of a fluorine-based material and the provision of a durable coating layer still have limitations such as impairing the moisture exchangeability of a hollow fiber membrane or reducing heat resistance.

In addition, attempts have been made to crosslink an antioxidant with a hollow fiber membrane to suppress deterioration caused by an oxidative material. However, although various methods such as the use of sulfur-based crosslinking agents, ultraviolet crosslinking, and thermal crosslinking have been researched to crosslink an antioxidant, sulfur-based crosslinking agents have limitations of degrading the power generation performance of fuel cells, ultraviolet crosslinking has a problem of destroying antioxidants, and thermal crosslinking still has limitations of causing shrinkage of sizes of pores present in a porous hollow fiber membrane to reduce moisture exchange performance.

Accordingly, in order to increase durability of a hollow fiber membrane against an oxidative material, the present inventors have conducted research on a hollow fiber membrane which not only fundamentally removes an oxidative material flowing from a fuel cell stack into a membrane humidifier together with high-temperature and high-humidity air, but also allows a humidifier to have durability against an oxidative material.

The present inventors have completed the present disclosure by confirming that when the phenol-based antioxidant is dispersed within the porous polymer of the hollow fiber membrane, since the antioxidant is present to be non-crosslinked with the porous polymer, a certain amount of the antioxidant may flow out during a humidification process of external air and delivered into a stack together with humidified air to contribute to the removal of an oxidative material generated inside the stack, and a portion of the antioxidant may be embedded in the framework of the porous polymer and present integrally therewith to contribute to the improvement of the oxidation resistance of the porous polymer against the oxidative material.

According to an embodiment, providing of the hollow fiber membrane in which the phenol-based antioxidant is non-crosslinked and present in the hollow fiber membrane may include preparing the dope solution for forming a hollow fiber membrane.

According to an embodiment, the method may include preparing the dope solution by mixing the polymer and the phenol-based antioxidant in an organic solvent, wherein a spinning solution is obtained by mixing the phenol-based antioxidant in an amount of 0.01 to 5 parts by weight with respect to 100 parts by weight of the polymer. In this case, the organic solvent used in the preparation of the dope solution may be a third solvent to be described below, for example, N-methyl-2-methylpyrrolidone.

The solvent may include at least one of a first solvent, a second solvent, and the third solvent. For example, the solvent may be a mixed solvent including two types of solvents of the first solvent, the second solvent, and the third solvent.

The first solvent may be a solvent that may not dissolve a polymer at room temperature (for example, 23 to 25 °C) but may dissolve the polymer at a high temperature (for example, 80 °C or more), and may include butanol, isobutanol, octanol, pentanol, isopentanol, dimethyl phthalate, diethyl phthalate, dibutyl phthalate, dioctyl phthalate, polyoxylethylene octylphenyl ether, or a combination thereof.

The second solvent may be a solvent that may not dissolve the polymer, and may include water, methanol, ethanol, isopropanol, acetone, hexane, pentane, benzene, toluene, carbon tetrachloride, o-dichlorobenzene, polyethylene glycol, or a combination thereof.

The third solvent may be a solvent that may dissolve the polymer even at room temperature, and may include N-methyl-2-pyrrolidone, dimethyl sulfoxide, dimethylacetamide, dimethylformamide, methyl ethyl ketone, tetrahydrofuran, tetramethylurea, or trimethyl phosphate.

Those of ordinary skill in the art may use any one of the first solvent, the second solvent, and the third solvent or a mixture of two or more solvents thereof in consideration of the characteristics of a polymer raw material and the preparation of a hollow fiber membrane having desired physical properties.

According to an embodiment, when the solvent is a mixed solvent of two types of solvents, a mixing ratio of the solvents may be in a range of 1:9 to 9:1 by weight, but is not limited thereto, and those of ordinary skill in the art may select an appropriate range in consideration of the amounts of a polymer and an antioxidant, the viscosity of a spinning solution, the porosity of a hollow fiber membrane, and the physical properties of a final hollow fiber membrane.

According to an embodiment, the spinning solution may include a polymer forming a framework of the hollow fiber membrane, a phenol-based antioxidant, and a solvent, and may further include an additive as needed. The spinning solution has a structure in which a solvent is removed during a process of forming a hollow fiber membrane, and a final product contains a phenol-based antioxidant in a non-crosslinked form in a framework of a porous polymer.

According to an embodiment, an amount of the polymer included in the spinning solution may be in a range of 15 to 25 parts by weight with respect to 100 parts by weight of the total of the spinning solution. For example, the amount of the polymer included in the spinning solution may be in a range of 16 to 24 parts by weight, 17 to 23 parts by weight, 18 to 22 parts by weight, or 19 to 21 parts by weight.

According to an embodiment, an amount of the phenol-based antioxidant included in the spinning solution may be in a range of more than 0 to 5 parts by weight or 0.001 to 5 parts by weight with respect to 100 parts by weight of the polymer forming the framework of the hollow fiber membrane.

According to an embodiment, a temperature at which a polymer and a phenol-based antioxidant, and optionally an additive, are mixed in a solvent in the obtaining of the spinning solution may be appropriately selected from room temperature or a high temperature in consideration of the used polymer, phenol-based antioxidant, additive, and solvent.

According to an embodiment, a time required to mix the spinning solution may be a time taken for a polymer, a phenol-based antioxidant, and any additive to be sufficiently dissolved and/or dispersed in a solvent.

According to an embodiment, the spinning solution may have a viscosity of 5,000 to 50,000 cps at a temperature of 35 °C. When the viscosity of the spinning solution satisfies the above range, the spinning solution may be smoothly discharged through a spinneret without blockage.

In order to maintain the viscosity of the spinning solution within the above range, a temperature of a spinning nozzle may be adjusted to a certain temperature or more. Alternatively, if necessary, the spinning solution may further include a viscosity modifier to adjust viscosity.

According to an embodiment, the spinning solution may further include an additive in consideration of the membrane-forming properties and porosity of the hollow fiber membrane, the dispersibility of the antioxidant, and the viscosity of the spinning solution.

For example, the additive may include at least one of polyethylene glycol, glycerin, diethyl glycol, triethylene glycol, ethanol, polyvinylpyrrolidone, water, zinc chloride, and lithium chloride.

According to an embodiment, the discharging of the spinning solution into the coagulation bath may include discharging the discharged solution using a tubular spinning device such as a double-tubular spinning device or a triple-tubular spinning device, but one or more embodiments are not limited to such a tubular type. Any discharge method capable of forming a hollow form may be used without limitation.

According to an embodiment, when the spinning solution is discharged into the coagulation bath through the double-tubular spinning device, compositions of the spinning solutions discharged from respective tubes of the double-tubular device may be the same or different. For example, when the spinning solution is discharged using the triple-tubular spinning device, compositions of the spinning solutions passing through respective tubes may be the same or different. For example, when the triple-tubular spinning device is used, compositions of the spinning solutions passing through tubes disposed at inner and outer sides of a tubular structure may be the same, and only a composition of the spinning solution passing through an intermediate tube between the inner side and the outer side may be different.

According to an embodiment, in the discharging of the spinning solution into the coagulation bath, a spinning temperature may be set to a temperature that is greater than or equal to a temperature for mixing a spinning solution. In this case, when a multi-tubular spinneret is used, temperatures of individual spinnerets may be set differently so that the spinning solution may be optimally discharged at an appropriate temperature.

According to an embodiment, in the discharging of the spinning solution into the coagulation bath, a discharge speed may be in a range of 5 to 100 g/min.

According to an embodiment, when the spinning solution is discharged through a tubular nozzle, a core solution may be simultaneously discharged into an inner hollow portion of a tube. The core solution may include a mixed solution of the second solvent and the third solvent.

According to an embodiment, the core solution may be prepared by mixing the second solvent and the third solvent in a volume ratio of 3:7 to 7:3. When the core solution satisfies the volume ratio of the above range, an antioxidant contained in the spinning solution may be incorporated into the hollow fiber membrane during a phase inversion process of a spinning material. For example, the core solution may be prepared by mixing the second solvent and the third solvent in a volume ratio of 5:5 to 7:3.

When the core solution is mixed in the volume ratio of the second solvent and the third solvent, the phenol-based antioxidant may be dispersed and present within the porous polymer without crosslinking (that is, in a non-crosslinked state).

According to an embodiment, the core solution may further include a phenol-based antioxidant. Since the core solution further includes the phenol-based antioxidant, the antioxidant may be dispersed on the inner surface of the hollow fiber membrane through phase separation during a hollow fiber membrane formation process. As a result, the antioxidant may be dispersed and present at a high concentration on the inner surface of the hollow fiber membrane. As described above, when the core solution including the antioxidant is simultaneously discharged, a spinning solution may include a small amount of the antioxidant or may contain no antioxidant.

According to an embodiment, a spinning material discharged from the spinning device may come into contact with a coagulation solution in the coagulation bath through an air gap.

The air gap may be an area in which the spinning material comes into contact with air, and artificial cooling air may be supplied in consideration of the physical properties of the spinning material. For example, a length of the air gap may be set to 0.1 to 50 cm. The air gap is a section in which primary phase inversion occurs, and phase inversion occurs through exchange of moisture in the atmosphere with an organic solvent in a spinning solution. When the length of the air gap satisfies the above range, sufficient phase inversion may occur to obtain a hollow fiber membrane having a desired pore structure.

The spinning material passes through the air gap and comes into contact with the coagulation solution included in the coagulation bath, thereby solidifying to form a porous hollow fiber membrane.

According to an embodiment, the coagulation bath may be provided as one coagulation bath, but one or more embodiments are not limited thereto. The coagulation bath may be configured such that two or more coagulation baths are consecutively disposed. When there are two or more coagulation baths, coagulation solutions used in respective coagulation baths may be the same or different.

According to an embodiment, the coagulation solution included in the coagulation bath serves to coagulate a discharged solution, which is discharged through a spinneret, into the form of a hollow fiber membrane. In this case, those of ordinary skill in the art may appropriately select and use a used coagulation solution from known coagulation solutions in consideration of the porosity of the hollow fiber membrane, the pore structure of the hollow fiber membrane, and the like.

For example, the second solvent such as an acidic solution or water may be used as the coagulation solution.

According to an embodiment, the hollow fiber membrane obtained through the coagulation bath may undergo post-treatment.

According to an embodiment, the post-treatment may include performing chemical treatment and/or physical treatment.

For example, the chemical treatment in the post-treatment may be performed to remove and dry a coagulation solution included in pores after the hollow fiber membrane is formed, and may include rinsing, washing, hot water treatment, or the like. If necessary, a solution used for rinsing, washing, hot water treatment, or the like may further include an antioxidant.

For example, the physical treatment in the post-treatment may further include a stretching or shrinking process of controlling the size and shape of the pores inside the hollow fiber membrane to improve the strength and durability of the hollow fiber membrane.

According to an embodiment, after the hollow fiber membrane is formed, post-treatment in which a solution in which an antioxidant is dissolved in the second solvent is introduced into a hollow portion of a hollow fiber membrane and then dried may be performed. Through such post-treatment, an antioxidant coating layer may be provided on the inner surface of the hollow fiber membrane. The post-treatment in which the antioxidant coating layer is provided on the inner surface of the hollow fiber membrane may be additionally performed in addition to a process described above, or after a hollow fiber membrane with or without an antioxidant is formed, the post-treatment may also be performed for the purpose of preparing an optional antioxidant coating layer only on an inner surface thereof.

In a hollow fiber membrane for a fuel cell humidifier prepared through a process described above, since an antioxidant is not bonded to a hollow fiber membrane through a crosslinker or binder and is dispersed inside the hollow fiber membrane or forms a coating layer on an inner surface, during a moisture exchange process of the hollow fiber membrane, the antioxidant may be easily eluted in external air.

According to another aspect, provided is a fuel cell membrane humidifier including the hollow fiber membrane for a fuel cell membrane humidifier.

For the hollow fiber membrane, reference may be made to the above description, and hereinafter, a humidifier will be described with reference to FIGS. 1 and 2.

FIGS. 1 and 2 are perspective views of a humidifier 100 for a fuel cell, according to an embodiment of the present disclosure.

As shown in FIGS. 1 and 2, the humidifier 100 for a fuel cell of the present disclosure includes a middle case 110, a cap case 120, a fixing portion 130, and a hollow fiber membrane bundle 200.

The middle case 110 is coupled to the cap case 120 to form an exterior of the humidifier 100 for a fuel cell. The middle case 110 and the cap case 120 may consist of hard plastic such as polycarbonate, or metal. A cross section of the middle case 110 and the cap case 120 in a width direction may have a circular shape as shown in FIG. 1 or a polygonal shape as shown in FIG. 2. The polygonal shape may be a quadrangular shape, a square shape, a trapezoid shape, a parallelogram shape, a pentagonal shape, a hexagonal shape, or the like., and the polygonal shape may have rounded corners. In addition, the circular shape may be an oval shape.

In the middle case 110, a second fluid inlet 112 through which a second fluid is supplied and a second fluid outlet 113 through which the second fluid is discharged are each formed.

In FIGS. 1 and 2, a plurality of hollow fiber membranes 210 are illustrated as being disposed in the middle case 110 in the form of a single hollow fiber membrane bundle 200, but the hollow fiber membranes 210 may also be disposed in the middle case 110 while being divided and accommodated in two or more cartridges.

A fluid inlet/outlet 121 is formed in the cap case 120. The fluid inlet/outlet 121 formed in one of the cap cases 120 connected to opposite end portions of the middle case 110 serves as the first fluid inlet, and the fluid inlet/outlet 121 formed in the other one serves as the first fluid outlet. A first fluid flowing in through the fluid inlet/outlet 121 serving as the first fluid inlet passes through internal channels (that is, lumens) of the hollow fiber membranes 210 accommodated inside the middle case 110 and then is discharged through the fluid inlet/outlet 121 serving as the first fluid outlet.

End portions of the hollow fiber membranes 210 are potted in the fixing portion 130. The fixing portion 130 binds the hollow fiber membranes 210 and fills gaps between the hollow fiber membranes 210 and gaps between the hollow fiber membranes 210 and the middle case 110. Thus, each of the opposite end portions of the middle case 110 is blocked by the fixing portion 130, and a passage through which the second fluid passes is formed therein. A material of the fixing portion 130 is known, and a detailed description thereof is omitted herein.

Hereinafter, an embodiment of the present disclosure will be described through examples and comparative examples, and the scope of the present disclosure is not intended to be limited to the examples.

### Example 1

A phenol-based antioxidant (trade name: Irganox 1010) was mixed into a hollow fiber membrane polymer composition, and a spinning solution was prepared such that the phenol-based antioxidant was included in an amount of 1 wt% with respect to an amount of the hollow fiber membrane porous polymer. The spinning solution was then discharged into a coagulation bath through a tubular spinneret, solidified in the coagulation bath, and then washed and dried to prepare a humidifying membrane.

Here, the hollow fiber membrane polymer composition was prepared by mixing 20 wt% of PES, 3 wt% of polyvinylpyrrolidone (PVP), and 77 wt% of N-methyl-2-pyrrolidone (NMP) as a solvent, and a 60 °C coagulation solution in which water and NMP were mixed in a weight ratio of 7:3 was used in the coagulation bath. The spinning solution passed through air over a length of about 10 cm and then coagulated in the coagulation bath.

### Example 2

A humidifying membrane was prepared in the same manner as in Example 1, except that a phenol-based antioxidant (trade name: Irganox 1010) was mixed into a spinning solution, and the spinning solution was prepared such that the phenol-based antioxidant was included in an amount of 3 wt% with respect to an amount of a hollow fiber membrane porous polymer.

### Example 3

A humidifying membrane was prepared in the same manner as in Example 1, except that a phenol-based antioxidant (trade name: Irganox 1010) was mixed into a spinning solution, and the spinning solution was prepared such that the phenol-based antioxidant was included in an amount of 5 wt% with respect to an amount of a hollow fiber membrane porous polymer.

### Comparative Example 1

A humidifying membrane was prepared in the same manner as in Example 1, except that a phenol-based antioxidant was not included in a spinning solution.

### Comparative Example 2

A humidifying membrane was prepared in the same manner as in Example 1, except that post-treatment was performed to crosslink a phenol-based antioxidant with PES by allowing dry air with a temperature of 130 °C to 140 °C to flow inside a tube of a dry humidifying membrane for 3 hours.

### Comparative Example 3

A humidifying membrane was prepared in the same manner as in Example 1, except that a phenol-based antioxidant (trade name: Irganox 1010) was mixed into a spinning solution, and the spinning solution was prepared such that the phenol-based antioxidant was included in an amount of 7 wt% with respect to an amount of a hollow fiber membrane porous polymer.

### Evaluation Example 1 - Evaluation of antioxidant effect

After the humidifying membranes prepared in Examples 1 to 3 and Comparative Examples 1 to 3 were immersed in a 3 % H₂O₂ solution (containing 2 ppm FeSO₄) at a temperature of 80 °C for 24 hours, a molecular weight reduction ratio was confirmed. After immersion for 48 hours, a ratio of a reduced weight to an initial oxidized membrane weight was confirmed. Results thereof are shown in Table 1 below.

**[Table 1]**

| | Molecular weight reduction ratio after 24 hours | Weight reduction ratio after 24 hours | Molecular weight reduction ratio after 48 hours | Weight reduction ratio after 48 hours | Molecular weight reduction ratio after 72 hours | Weight reduction ratio after 72 hours |
|---|---|---|---|---|---|---|
| Example 1 | 5 % | 8 % | 9 % | 11 % | 12 % | 14 % |
| Example 2 | 1 % | 3 % | 3 % | 5 % | 4 % | 7 % |
| Example 3 | 1 % | 2 % | 2 % | 4 % | 3 % | 5 % |
| Comparative Example 1 | 12 % | 15 % | 25 % | 30 % | 32 % | 40 % |
| Comparative Example 2 | 1 % | 3 % | 3 % | 6 % | 5 % | 7 % |
| Comparative Example 3 | - | - | - | - | - | - |

As shown in Table 1, it was confirmed that the humidifying membrane of Example 1 (non-crosslinked antioxidant) including a phenol-based antioxidant exhibited oxidation resistance similar to that of the humidifying membrane of Comparative Example 2 (crosslinked antioxidant), and as compared to the humidifying membrane of Comparative Example 1, the humidifying membrane of Example 1 showed a 19 % lower molecular weight reduction ratio after 24 hours, a 20 % lower molecular weight reduction ratio after 48 hours, an approximately 15 % lower weight reduction ratio after 48 hours, a 28 % lower molecular weight reduction ratio after 72 hours, and a 33% lower weight reduction ratio after 72 hours. In light of such data, it is confirmed that a humidifying membrane including a phenol-based antioxidant provides sufficient durability against an oxidative material.

As an amount of an antioxidant increased to 1 %, 3 %, and 5 % as in Examples 1 to 3, chemical durability performance increased, and even in the case of a humidifying membrane including 1 % of an antioxidant, a sufficient level of durability was secured as compared to a humidifying membrane not including an antioxidant. In Comparative Example 3 in which an antioxidant was contained in an amount of 7 % which exceeded 5 %, due to high viscosity of a spinning solution, a proper hollow fiber membrane was not formed, and the preparation of a membrane was impossible.

### Evaluation Example 2- Evaluation of humidification performance

The humidifying membranes prepared in Examples 1 to 3 and Comparative Examples 1 to 3 were used as humidifying membranes of H10N products (Kolon Industries, INC.) to evaluate humidification performance. Performance evaluation was performed by allowing humid air (2,000 standard liters per minute (slpm), 70 °C, relative humidity (RH) of 100 %) and dry air (2,000 slpm, 70 °C) to meet in a counter flow, and performance was determined based on a dew point.

H10N is a product that contains 1,000 strands of a corresponding humidifying membrane with an effective length of 25 cm.

**[Table 2]**

| | Humidification performance (dew point) |
|---|---|
| Example 1 | 49.8 |
| Example 2 | 49.3 |
| Example 3 | 49.1 |
| Comparative Example 1 | 50.4 |
| Comparative Example 2 | 40.2 |
| Comparative Example 3 | - |

As shown in Table 2, Example 1 (use of a humidifying membrane with a non-crosslinked antioxidant) exhibited humidification performance similar to that of Comparative Example 1 to which a general humidifying membrane (without an antioxidant) was applied, and exhibited superior humidification performance as compared to Comparative Example 2 (use of a humidifying membrane with a crosslinked antioxidant). It is determined that the moisture exchange performance of the humidifying membrane of Comparative Example 2 was reduced due to a reduction in pore size caused by pore shrinkage during a heat treatment process of crosslinking an antioxidant with a porous polymer.

As can be seen in Table 2, the humidification performance of the humidifying membranes of Examples 1 to 3 including antioxidants tends to decrease slightly, but when the antioxidant is non-crosslinked, the performance thereof is similar to that of a humidifying membrane without an antioxidant so that the humidifying membranes of Examples 1 to 3 may be used for a membrane humidifier.

Meanwhile, in the case of Comparative Example 3 including an antioxidant in an amount of 7 %, due to too high viscosity of a spinning solution, a concentric circle of a hollow fiber membrane was not properly formed during a membrane preparation process. This was disadvantageous in terms of durability and performance of a membrane, which made it impossible to maintain a membrane form.

When Evaluation Examples 1 and 2 above were comprehensively reviewed, a humidifying membrane in which an antioxidant was non-crosslinked with and dispersed within a porous polymer as in Example 1 not only exhibited superior oxidation resistance as compared to a humidifying membrane without an antioxidant, but also exhibited humidification performance similar to that of a humidifying membrane without an antioxidant according to a related art, unlike a humidifying membrane, in which an antioxidant was crosslinked, of which humidification performance was reduced.

That is, durability of a hollow fiber membrane for a fuel cell humidifier is selectively is improved without a reduction in humidification performance, thereby obtaining superior effects as compared to humidifying membranes disclosed in a related art.

## Claims

1. A hollow fiber membrane for a fuel cell membrane humidifier, the hollow fiber membrane comprising:
a porous polymer; and
a phenol-based antioxidant dispersed within the porous polymer.

2. The hollow fiber membrane of claim 1, wherein the porous polymer comprises a sulfone group-containing polymer.

3. The hollow fiber membrane of claim 2, wherein the sulfone-containing polymer comprises a polysulfone-based polymer, a sulfonated polysulfone, a perfluorosulfonic acid (PFSA)-based polymer, a polyphenylsulfone-based polymer, a polyethersulfone (PES)-based polymer, or any combination thereof.

4. The hollow fiber membrane of claim 2, wherein the porous polymer further comprises at least one polymer selected from the group consisting of a polyvinylidene fluoride (PVDF)-based polymer, cellulose acetate, cellulose triacetate, polymethyl methacrylate, Nafion, a polystyrene (PS)-based polymer, a polytetrafluoroethylene (PTFE)-based polymer, a polyacrylonitrile (PAN)-based polymer, a polyetherimide (PEI)-based polymer, and a polyimide (PI)-based polymer.

5. The hollow fiber membrane of claim 1, wherein the porous polymer is included in an amount of 90 parts by weight or more but less than 100 parts by weight with respect to 100 parts by weight of the hollow fiber membrane.

6. The hollow fiber membrane of claim 1, wherein the phenol-based antioxidant is non-crosslinked with the porous polymer.

7. The hollow fiber membrane of claim 1, wherein the porous polymer comprises a plurality of pores, and
at least a portion of the phenol-based antioxidant is present within the pores.

8. The hollow fiber membrane of claim 1, wherein the phenol-based antioxidant comprises Irganox 1010 (pentaerythritol tetrakis[3-(3,5-di-t-butyl-4-hydroxyphenyl)propionate manufactured by BASF SE), Irganox 1076 (octadecyl-3-(3,5-di-t-butyl-4-hydroxyphenyl)propionate manufactured by BASF SE), Irganox 1330 (3,3',3",5,5',5"-hexa-tert-butyl-α,α',α"-(mesitylene-2,4,6-triyl)tri-p-cresol manufactured by BASF SE), Irganox 3114 (1,3,5-tris(3,5-di-tert-butyl-4-hydroxybenzyl)-1,3,5-triazine-2,4,6(1H,3H,5H)-trione manufactured by BASF SE), Irganox 3790 (1,3,5-tris((4-tert-butyl-3-hydroxy-2,6-xylyl)methyl)-1,3,5-triazine-2,4,6(1H,3H,5H)-trione manufactured by BASF SE), Irganox 1035 (thiodiethylene bis[3-(3,5-di-tert-butyl-4-hydroxyphenyl)propionate] manufactured by BASF SE), Irganox 1135 (benzenepropanoic acid, 3,5-bis(1,1-dimethylethyl)-4-hydroxy-C7-C9 side chain alkyl ester manufactured by BASF SE), Irganox 1520L (4,6-bis(octylthiomethyl)-o-cresol manufactured by BASF SE), Irganox 3125 (manufactured by BASF SE), Irganox 565 (2,4-bis(n-octylthio)-6-(4-hydroxy-3',5'-di-tert-butylanilino)-1,3,5-triazine manufactured by BASF SE), ADEKAstab^{®} AO-80 (3,9-bis[2-(3-(3-tert-butyl-4-hydroxy-5-methylphenyl)propanoyloxy)-1,1-dimethylethyl]-2,4,8,10-tetraoxaspiro[5.5]undecane manufactured by ADEKA Corporation), Smilizer^{®} BHT, GA-80, and GS (all manufactured by Sumitomo Chemical Co., Ltd.), Cyanox^{®} 1790 (manufactured by Cytec Co., Ltd.), and vitamin E (manufactured by Eisai Co., Ltd.), or any combination thereof.

9. The hollow fiber membrane of claim 1, wherein the phenol-based antioxidant is included in an amount of 0.1 to 5 parts by weight with respect to 100 parts by weight of the porous polymer.

10. The hollow fiber membrane of claim 1, further comprising polyvinylpyrrolidone.

11. A method of preparing a hollow fiber membrane for a fuel cell membrane humidifier, the method comprising:
preparing a dope solution for forming a hollow fiber membrane comprising a polymer and a phenol-based antioxidant;
discharging the dope solution into a coagulation bath through a tubular spinning device; and
coagulating, in the coagulation bath, a spinning solution which has been discharged into the coagulation bath, and then winding and drying a coagulated resultant to obtain the hollow fiber membrane,
wherein the hollow fiber membrane comprises a porous polymer and the phenol-based antioxidant, and the phenol-based antioxidant is dispersed within the porous polymer.

12. The method of claim 11, comprising preparing the dope solution by mixing the polymer and the phenol-based antioxidant in an organic solvent,
wherein a spinning dope solution is obtained by mixing the phenol-based antioxidant in an amount of 0.01 to 5 parts by weight with respect to 100 parts by weight of the polymer.

13. The method of claim 11, wherein the tubular spinning device comprises, in a
hollow portion, a core solution comprising a mixed solution of a second solvent and a third solvent in a volume ratio of 3:7 to 7:3,
the second solvent comprises water, methanol, ethanol, isopropanol, acetone, hexane, pentane, benzene, toluene, carbon tetrachloride, o-dichlorobenzene, polyethylene glycol, or a combination thereof, and
the third solvent comprises N-methyl-2-pyrrolidone, dimethyl sulfoxide, dimethylacetamide, dimethylformamide, methyl ethyl ketone, tetrahydrofuran, tetramethylurea, trimethyl phosphate, or a combination thereof.

14. The method of claim 13, wherein the core solution further comprises a phenol-based antioxidant.

15. A fuel cell membrane humidifier comprising the hollow fiber membrane for a fuel cell humidifier of any one of claims 1 to 10.
